Europäisches Patentamt

European Patent Office

Office européen des brevets

(11) Veröffentlichungsnummer : **0 138 825**
**B1**

# (12) EUROPÄISCHE PATENTSCHRIFT

(45) Veröffentlichungstag der Patentschrift :
04.05.88

(21) Anmeldenummer : 84900507.9

(22) Anmeldetag : 20.01.84

(86) Internationale Anmeldenummer :
PCT/EP 84/00017

(87) Internationale Veröffentlichungsnummer :
WO/8403917 (11.10.84 Gazette 84/24)

(51) Int. Cl.⁴ : **F 16 B 13/06, B 25 B 27/00,**
**F 16 B 13/10**

(54) FORMSCHLÜSSIGE DÜBEL-BEFESTIGUNGSANORDNUNG.

(30) Priorität : 02.04.83 DE 3312141

(43) Veröffentlichungstag der Anmeldung :
02.05.85 Patentblatt 85/18

(45) Bekanntmachung des Hinweises auf die Patenterteilung : 04.05.88 Patentblatt 88/18

(84) Benannte Vertragsstaaten :
AT BE CH FR GB LI NL SE

(56) Entgegenhaltungen :
EP-A- 0 002 654
DE-A- 2 637 043
GB-A-   725 291

(73) Patentinhaber : Liebig, Heinrich
Wormser Strasse 23
D-6102 Pfungstadt (DE)

(72) Erfinder : Liebig, Heinrich
Wormser Strasse 23
D-6102 Pfungstadt (DE)

(74) Vertreter : Heiber, Friedrich G., Dipl.-Ing. et al
Patentanwälte Dipl.-Ing. F. G. Heiber Dipl.-Ing. J.K.
Zenz Giesser Weg 47
D-6144 Zwingenberg (DE)

**Beschreibung**

Die Erfindung betrifft eine formschlüssige Befestigungsanordnung eines Dübels in einer Bohrung in einem Untergrund, bei welcher die als zylindrische Sackbohrung ausgeführte Bohrung mit Abstand von ihrer Mündung im Untergrund mit einer eine im wesentlichen radial umlaufende und rückwärts zur Bohrungsmündung weisende Hinterschnittfläche aufweisenden Erweiterung versehen ist, und der Dübel ein dem Durchmesser der Bohrung im wesentlichen entsprechendes, in die Bohrung einführbares und am bohrungsinneren Ende eines langgestreckten Befestigungsbolzens angeordnetes Kopfstück aufweist, auf dem die bohrungsinneren Enden von Riegelelementen schwenkbar gehaltert sind, deren zur Bohrungsmündung rückwärts weisende Enden von einer innerhalb des Durchmessers der Bohrung liegenden Lage in eine Lage verschwenkbar sind, in welcher sie zumindest teilweise über den Durchmesser des Kopfstücks vorstehen und an der Hinterschnittfläche der Bohrung verriegelnd angreifen, wobei der an seinem äußeren Ende einen Schraubenkopf oder eine auf ein Gewinde des Befestigungsbolzens aufgeschraubte Mutter tragende Befestigungsbolzen von einer Distanzhülse umgeben ist, welche an ihrem bohrungsinneren Ende einen zwischen die zur Bohrungsmündung weisenden Enden der Riegelelemente angreifenden, sich zum Bohrungsinnern konisch verjüngenden Bauteil aufweist, so daß bei einer Verschiebung des Kopfstücks in Richtung zur Bohrungsmündung die zur Bohrungsmündung weisenden Enden der Riegelelemente zwangsläufig radial nach außen verschwenkt werden.

Für solche Befestigungsanordnungen sind vom Anmelder Dübel der vorerwähnten Art entwickelt worden (EP-A-2654 ; EP-A-15 305), welche sogleich großes Interesse für solche Anwendungsfälle gefunden haben, in denen die bekannten und bewährten Spreizdübel aus Sicherheitsgründen nicht verwendet werden können. Insbesondere die Tatsache, daß die neuentwickelten Dübel eine spreizdruckfreie, formschlüssige Verankerung ermöglichen, stellt einen wesentlichen Vorteil dar. Im Vergleich zu Spreizdübeln weisen die formschlüssig setzbaren Dübel allerdings eine komplexere Ausgestaltung auf, was ihre Herstellung entsprechend verteuert und dementsprechend auch ihren Einsatz beschränkt, zumal auch die Erzeugung der Hinterschnittfläche in der zugeordneten Vorbohrung und die Verriegelung der Dübel an der Hinterschnittfläche einen zusätzlichen Arbeitsaufwand darstellt.

Eine Weiterentwicklung der bekannten formschlüssig setzbaren Dübel derart, daß sie einerseits selbst einfacher aufgebaut und andererseits aber auch einfacher und schneller — z. B. durch Ausschwenken und Verriegeln ihrer Verriegelungselemente an der Hinterschnittfläche der Bohrung mittels eines auf das bohrungsäußere Ende ausgeübten Schlages — setzbar sind, ist dagegen schwierig, und auch die aus der GB-A-725 291 bzw. der DE-A-26 37 043 bekannten Dübelausgestaltungen können in dieser Richtung keinen Hinweis geben.

Der Erfindung liegt daher die Aufgabe zugrunde, eine Befestigungsanordnung eines Werkstücks auf einem Untergrund mittels eines durch Schlag setzbaren, formschlüssig an eine Hinterschnittfläche in einer Vorbohrung im Untergrund verankerbaren Dübels zu schaffen, wobei der Dübel im Vergleich zu den bekannten formschlüssig setzbaren Dübeln ohne Funktionsbeeinträchtigung in der Ausgestaltung vereinfacht und somit kostengünstiger und mit geringeren Abmessungen herstellbar ist.

Ausgehend von einer Befestigungsanordnung der eingangs erwähnten Art wird diese Aufgabe erfindungsgemäß dadurch gelöst, daß das Kopfstück und die Riegelelemente einstückig zusammenhängende Teile eines hülsenförmigen Verankerungsbauteils sind, in dessen Außenfläche eine keilförmige Umfangsnut eingestochen ist, wobei die Wand des Verankerungsbauteils durch eine Anzahl von von der bohrungsmündungsseitigen Stirnkante aus in gleichmäßigen Winkelabständen parallel zur Mittelachse bis zur Umfangsnut eingearbeitete Schlitze in eine Anzahl von Segmentabschnitten unterteilt ist, welche die Riegelelemente bilden, während der verbleibende, nicht geschlitzte Teil des Verankerungsbauteils das Kopfstück bildet, daß die von der bohrungsinneren Stirnfläche des Kopfstücks aus bis zur bohrungsmündungsseitigen Stirnfläche der Distanzhülse gemessene Länge des Dübels in eingeschwenktem Zustand der Riegelelemente etwa gleich der Tiefe der Vorbohrung zuzüglich der Dicke des gegebenenfalls zu befestigenden Werkstücks und des Maßes des für das Ausschwenken der Riegelelemente in die Verriegelungsstellung erforderlichen Verschiebungsweges ist, und daß zwischen dem sich konisch verjüngenden Bauteil und der Distanzhülse ein sich unter Einwirkung von Druckspannungen in Axialrichtung im Sinne einer Verkürzung verformender Hülsenbauteil angeordnet ist, dessen Widerstand gegen Verkürzung bei axialer Schlageinwirkung größer als der Widerstand der Riegelelemente gegen Ausschwenken in die an der Hinterschnittfläche verriegelte Stellung ist. Der einstückige Verankerungsbauteil ist in fertigungstechnisch einfacher Weise auf automatischen spanenden Werkzeugmaschinen als Drehteil von Rohmaterial herstellbar, wobei die bei den bekannten Dübeln erforderliche Montage der gesondert hergestellten Riegelelemente am Kopfstück entfällt. Das Setzen des Dübels erfolgt nunmehr einfach so, daß er in Durchsteckmontage durch die Bohrung des zu befestigenden Werkstücks hindurch in die Bohrung eingeschoben wird, bis sein bohrungsinneres Ende auf dem Grund der Bohrung aufsitzt. Das bohrungsmündungsseitige Ende der Distanzhülse steht dann noch um wenigstens das zum Ausschwenken der Riegelelemente in die Verriegelungsstellung erforderliche Maß über die Oberfläche des zu befestigenden Werkstücks vor. Zum Setzen genügt dann ein kurzer Schlag auf die bohrungsmündungsseitige Stirnfläche der Distanzhülse bzw. die in der Regel vorgesehene, zwischen der Distanzhülse und dem Kopf des Befestigungsbolzens bzw. der Mutter angeordnete Unterlegscheibe, um den konisch verjüngenden Bauteil zwischen die die Riegelelemente bildenden Segmentabschnitte zu treiben, und diese in die Verriegelungsstellung aufzuschwenken. Die Anordnung spezieller Drehsicherungen zur Verhinderung einer Drehung des Dübels beim Setzvorgang bzw. von unter Vorspannung gehaltenen und beim Setzen ausgelösten Federn — wie bei den bekannten Dübeln — entfällt also, wodurch die angestrebte Vereinfachung erreicht wird. Die Anordnung des sich unter Einwirkung von Druckspannungen in Axialrichtung verformenden Hülsenbauteils stellt darüber hinaus sicher, daß der Setzvorgang einerseits in der angestrebten Weise einfach und schnell durch Schlagwirkung erfolgen kann, während es andererseits möglich ist, das Werkstück auch dann stramm an die Unterlage anzuschrauben, wenn die Tiefe der zugeordneten Bohrung im Untergrund nicht hundertprozentig exakt eingehalten ist, d. h. wenn sie etwas zu kurz ist, oder wenn der zum Ausschwenken der Riegelelemente in die Verriegelungsstellung erforderliche Verschiebungsweg der Distanzhülse sich infolge eines etwas verringerten radialen Durchmessers der Erweiterungsbohrung verkürzt. D. h. trotz der erforderlichen Anpassung der Bohrungstiefe an die Größe des jeweils zugeordneten Dübels beeinträchtigen gewisse Abweichungen der Abmessungen der Bohrung die Funktion des vereinfachten Dübels nicht.

Die Erfindung ist in der folgenden Beschreibung in Verbindung mit der Zeichnung eines Ausführungsbeispiels näher erläutert, und zwar zeigt bzw. zeigen :

Fig. 1a, 1b und 1c Schnittansichten durch eine unter Verwendung eines formschlüssig in einer mit einer Hinterschnittfläche versehenen Bohrung setzbaren Dübels erstellten Befestigungsanordnung in verschiedenen Stufen des Setzvorgangs ;

Fig. 2a und 2b je eine vergrößerte Teilschnittansicht des in Fig. 1a innerhalb des strichpunktierten Kreises 2a bzw. in Fig. 1c innerhalb des strichpunktierten Kreises 2b liegenden Bereichs der Befestigungsanordnung ;

Fig. 3 eine perspektivische Ansicht des Verankerungsbauteils des verwendeten, formschlüssig setzbaren Dübels ;

Fig. 4 eine Seitenansicht des in Fig. 3 gezeigten Verankerungsbauteils ;

Fig. 5 eine Ansicht, gesehen in Richtung des Pfeils 5 in Fig. 4 ;

Fig. 6 eine Ansicht, gesehen in Richtung des Pfeils 6 in Fig. 4.

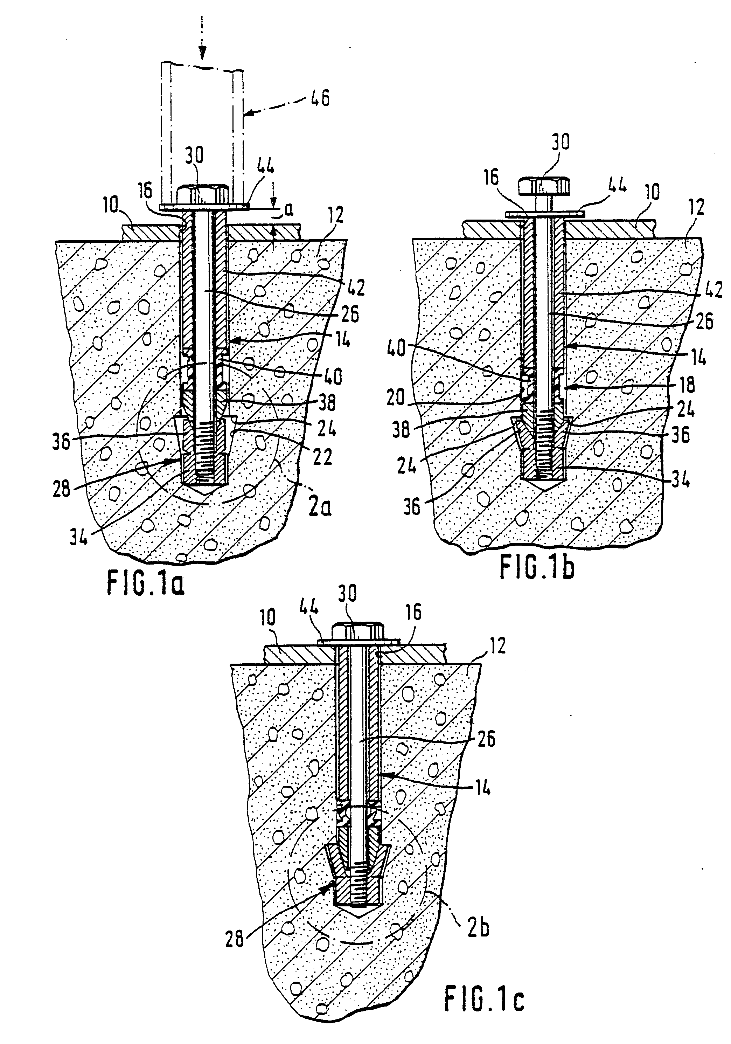

Die Figuren 1a, 1b und 1c zeigen eine Befestigungsanordnung eines Werkstücks 10 auf einem Untergrund 12, der beispielsweise ein Betonboden sein möge. Die Befestigung erfolgt mittels eines formschlüssig setzbaren Dübels 14, der in Durchsteckmontage durch die Befestigungsbohrung 16 im Werkstück 10 in ein Bohrloch 18 im Untergrund 12 eingeschoben ist, welches sich aus einer zylindrischen Vorbohrung 20 und einer mit Abstand von der Mündung der Bohrung vorgesehenen Erweiterungsbohrung 22 mit einer rückwärts zur Bohrungsmündung gewandten, radial umlaufenden Hinterschnittfläche 24 zusammensetzt.

Der Dübel 14 weist einen langgestreckten Befestigungsbolzen 26 auf, auf dessen bohrungsinnerem, mit Gewinde versehenen Abschnitt ein im Durchmesser nur geringfügig kleiner als der Durchmesser der Vorbohrung 20 bemessener, hülsenartiger Verankerungsbauteil 28 aufgeschraubt ist. Der Befestigungsbolzen 26 ist durch Drehen in den Verankerungsbauteil hinein- und aus ihm herausschraubbar, wofür am bohrungsäußeren Ende des Befestigungsbolzens ein Schraubenkopf 30 angeformt ist. Anstelle des fest angeformten Schraubenkopfs 30 könnte auch eine Mutter auf das dann mit Gewinde versehene bohrungsräußere Ende des Befestigungsbolzens 26 aufgeschraubt sein.

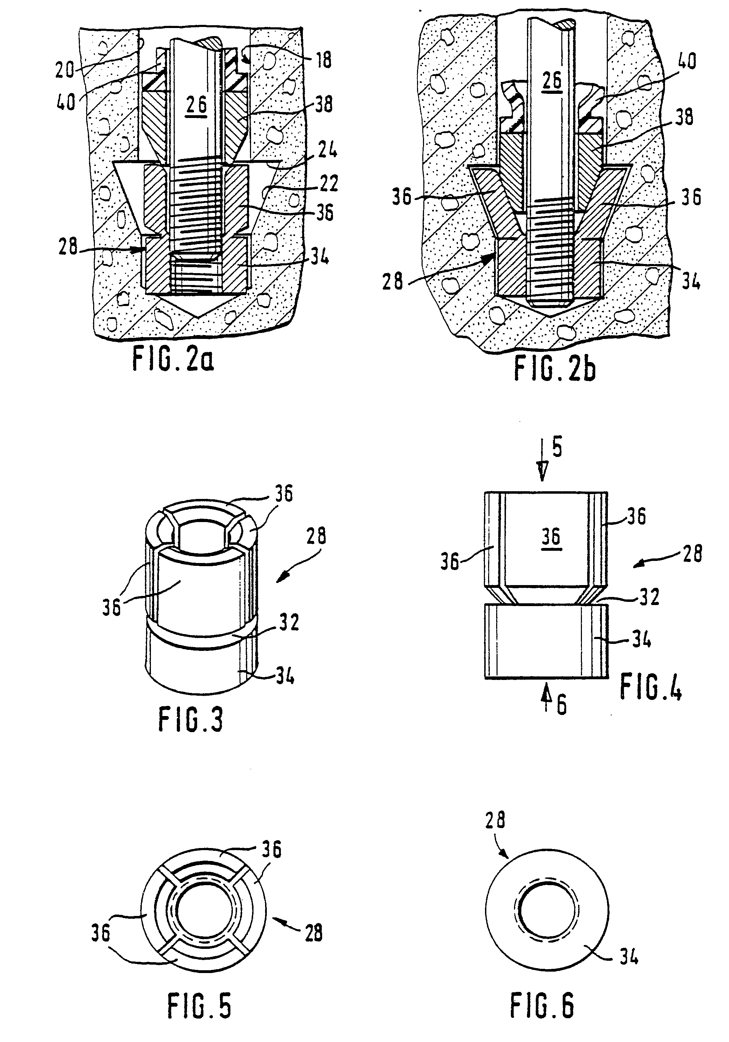

Der Verankerungsbauteil 28 ist — wie insbesondere in den Fig. 2a und 4 erkennbar ist — durch eine, in seiner Außenfläche eingestochene, im Querschnitt keilförmige Umfangsnut 32 in zwei, in Axialrichtung aufeinanderfolgende Hülsenabschnitte unterteilt, die über das zwischen dem Nutgrund der Umfangsnut 32 und der Innenbohrung des Verankerungsbauteils 28 verbleibende Material einstückig verbunden sind. Der untere oder bohrungsinnere Hülsenabschnitt bildet ein Kopfstück 34, in welchem das Gegengewinde zum Gewindeabschnitt am bohrungsinneren Ende des Befestigungsbolzens 26 gebildet ist. Der obere, nicht mit Gewinde versehene Hülsenabschnitt ist durch vier, von der bohrungsmündungsseitigen Stirnkante aus in gleichmäßigen Winkelabständen axial bis zur Umfangsnut 32 eingefräste Schlitze in vier segmentabschnittsförmige Riegelelemente 36 unterteilt, die also unter Verformung der sie mit dem Kopfstück 34 verbindenden Materialbereiche von der bohrungsmündungsseitigen Stirnfläche aus aufweitbar und ausschwenkbar sind, wobei die keilförmige Umfangsnut 32 sich schließt, d. h. die gegenüberliegenden Keilflächen am Kopfstück 34 bzw. den Riegelelementen 36 aneinander zur Anlage kommen, wie dies in Fig. 2b gezeigt ist.

Im Anschluß an die Riegelelemente 36 ist ein sich zum Bohrungsinnern hin konisch verjüngender und mit dem verjüngten Ende zwischen die Riegelelemente 36 greifender Bauteil 38 längsverschieblich auf dem Befestigungsbolzen 26 angeordnet. Auf der bohrungsmündungsseitigen Stirnfläche des Bauteils 38 ist ein Ende eines im dargestellten Fall aus Kunststoff hergestellten Hülsenbauteils 40 relativ geringer Wandstärke abgestützt, dessen bohrungsäußeres Ende an der bohrungsinneren Stirnfläche einer wiederum längsverschieblich auf dem Befestigungsbolzen 26 angeordneten Distanzhülse 42 anliegt. Zwischen der äußeren Stirnfläche der Distanzhülse 42 und dem Schraubenkopf 30 des Befestigungsbolzens 26 ist dann noch eine Unterlegscheibe 44 angeordnet, welche — wie im folgenden noch näher erläutert wird — nicht nur eine flächige Abstützung des Schraubenkopfs am Werkstück 10 bewirkt, sondern auch beim Setzvorgang des Dübels 14 eine Rolle spielt.

Das Setzen des Dübels 14, d. h. die Verankerung des Verankerungsbauteils 28 im Bohrloch 18 erfolgt durch axiales Eintreiben des sich konisch verjüngenden Bauteils 38 zwischen die zur Bohrungsmündung weisenden Enden der Riegelelemente 36, wobei diese so nach außen verschwenkt werden, daß sie die Hinterschnittfläche 24 untergreifen, d. h. den Verankerungsbauteil 28 und somit den Dübel 14 formschlüssig gegen Herausziehen aus dem Bohrloch 18 verriegeln. Das Eintreiben des Bauteils 38 soll dabei durch Schlagwirkung von außen über die Distanzhülse 42 und den Hülsenbauteil 40 erfolgen, was bedeutet, daß die Riegelelemente 36 über das Kopfstück 34 am Grund des Bohrlochs 18 abgestützt werden müssen, wobei die Distanzhülse 42 noch um den zum Ausschwenken der Riegelelemente erforderlichen Verschiebungsweg a über die Oberfläche des Werkstücks 10 vorstehen muß, wie dies in Fig. 1a veranschaulicht ist. Auf dem den Schraubenkopf 30 überragenden Rand der Unterlegscheibe 44 kann dann in der in Fig. 1a strichpunktiert dargestellten Weise ein rohrförmiges Werkzeug 46 aufgesetzt werden. Durch leichte Hammerschläge auf dieses Werkzeug wird die Distanzhülse 42 und über den Hülsenbauteil 40 der sich konisch verjüngende Bauteil 38 axial ins Bohrungsinnere eingetrieben (Fig. 1b), wobei die Riegelelemente 36 in die ausgeschwenkte Verriegelungsstellung verschwenkt werden. Der dann mit Abstand über der Unterlegscheibe 44 stehende Schraubenkopf 30 des Befestigungsbolzens 26 wird dann so gedreht, daß sich das Gewinde am bohrungsinneren Ende des Befestigungsbolzens in das Kopfstück 34 hineinschraubt. Dieses Anziehen des Befestigungsbolzens erfolgt so lange, bis der Schraubenkopf 30 das Werkstück 10 über die Unterlegscheibe 44 fest auf dem Untergrund 12 aufspannt (Fig. 1c). Durch Ungenauigkeiten in der Abstimmung der Tiefe des Bohrlochs 18 und der Länge des Dübels 14 ist denkbar, daß die Distanzhülse 42 nach dem Einschlagen noch etwas über die Oberfläche des Werkstücks 10 versteht, d. h. die Unterlegscheibe 44 nicht satt auf der Oberfläche des Werkstücks aufliegt. Um trotzdem eine feste Anpressung des Werkstücks 10 auf dem Untergrund 12 zu erreichen, ist also eine zusätzliche axiale Einwärtsverschiebung der Distanzhülse 42 ins Innere des Bohrlochs erforderlich. Möglich wird dies dadurch, daß der aus Kunststoff hergestellte Hülsenbauteil in Axialrichtung verformbar ist, wie dies in Fig. 1c und Fig. 2b erkennbar ist. Der Hülsenbauteil 40 muß also einerseits, einen hinreichend hohen Widerstand gegen Verformung haben, um die Schlagkräfte beim Setzen des Dübels ohne Verformung auf den sich konisch verjüngenden Bauteil zu übertragen, andererseits aber doch verformungsfähig genug sein, um durch das Einschreuben des Befestigungsbolzens eine axiale Verkürzung durch Verformung zu ermöglichen. Durch eine abgestimmte Bemessung der Stärke der sich beim Ausschwenken der Riegelelemente verformenden Übergangsbereiche zwischen den Riegelelementen 36 und dem Kopfstück 34 und der Stärke des Hülsenbauteils 40 ist dies erreichbar.

Es ist ersichtlich, daß im Rahmen des Erfindungsgedankens das beschriebene Ausführungsbeispiel des Dübels 14 abgewandelt und weitergebildet werden kann. So kann der Verankerungsbauteil 28 zusätzlich mit einer Drehsicherung versehen werden, welche beispielsweise — wie beim Dübel gemäß EP-A-2654 — von einem mit radial vorspringenden Haltekrallen versehenen elastischen Kunststoffring gebildet wird, der stramm auf einer Eindrehung am bohrungsinneren Ende des Kopfstücks 34 sitzt. Wenn anstelle des beschriebenen Schraubenkopfs 30 eine Mutter auf das äußere Ende des Befestigungsbolzens aufgeschraubt ist, wird dieser zweckmäßig an seinem bohrungsäußeren Ende zusätzlich mit einem Schraubenzieherschlitz versehen, an welchem beim Andrehen der Mutter ein Schraubenzieher zum Gegenhalten angesetzt werden kann. Eine Drehsicherung ist dann nicht erforderlich. Anstelle des verformbaren Kunststoff-Hülsenbauteils 40 kann zwischen dem konisch verjüngten Bauteil 38 und der Distanzhülse 42 auch eine Feder, z. B. eine Schraubenfeder, angeordnet werden, deren Widerstand gegen axiale Zusammendrückung dann so gewählt sein muß, daß sie die zum Ausschwenken der Riegelelemente 36 erforderliche Schlagkraft übertragen kann, bei Ausübung höherer Spannkräfte aber anstelle einer bleibenden Verformung, wie beim Hülsenbauteil 40, eine federelastische axiale Zusammendrückung ermöglicht.

**Patentanspruch**

Formschlüssige Befestigungsanordnung eines Dübels (14) in einer Bohrung (18) in einem Untergrund (12), bei welcher die als zylindrische Sackbohrung ausgeführte Bohrung mit Abstand von ihrer Mündung im Untergrund mit einer eine im wesentlichen radial umlaufende und rückwärts zur Bohrungsmündung weisende Hinterschnittfläche (24) aufweisenden Erweiterung (22) versehen ist, und der Dübel ein dem Durchmesser der Bohrung im wesentlichen entsprechendes, in die Bohrung einführbares und am bohrungsinneren Ende eines langgestreckten Befestigungsbolzens (26) angeordnetes Kopfstück (34) aufweist, auf dem die bohrungsinneren Enden von Riegelelementen (36) schwenkbar gehaltert sind, deren zur Bohrungsmündung rückwärts weisende Enden von einer innerhalb des Durchmessers der Bohrung liegenden Lage in eine Lage verschwenkbar sind, in welcher sie zumindest teilweise über den Durchmesser des Kopfstücks (34) vorstehen und an der Hinterschnittfläche (24) der Bohrung verriegelnd angreifen, wobei der an seinem äußeren Ende einen Schraubenkopf (30) oder eine auf ein Gewinde des Befestigungsbolzens (26) aufgeschraubte Mutter tragende Befestigungsbolzen von einer Distanzhülse (42) umgeben ist, welche an ihrem bohrungsinneren Ende einen zwischen die zur Bohrungsmündung weisenden Enden der Riegelelemente (36) angreifenden, sich zum Bohrungsinnern konisch verjüngenden Bauteil (38) aufweist, so daß bei einer Verschiebung des Kopfstücks (34) in Richtung zur Bohrungsmündung die zur Bohrungsmündung weisenden Enden der Riegelelemente (36) zwangsläufig radial nach außen verschwenkt werden, dadurch gekennzeichnet, daß das Kopfstück (34) und die Riegelelemente (36) einstückig zusammenhängende Teile eines hülsenförmigen Verankerungsbauteils (28) sind, in dessen Außenfläche eine keilförmige Umfangsnut (32) eingestochen ist, wobei die Wand des Verankerungsbauteils (28) durch eine Anzahl von von der bohrungsmündungsseitigen Stirnkante aus in gleichmäßigen Winkelabständerr parallel zur Mittelachse bis zur Umfangsnut (32) eingearbeitete Schlitze in eine Anzahl von Segmentabschnitten unterteilt ist, welche die Riegelelemente (36) bilden, während der verbleibende, nicht geschlitzte Teil des Verankerungsbauteils das Kopfstück (34) bildet, daß die von der bohrungsinneren Stirnfläche des Kopfstücks (34) aus bis zur bohrungsmündungsseitigen Stirnfläche der Distanzhülse (42) gemessene Länge des Dübels (14) in eingeschwenktem Zustand der Riegelelemente (36) etwa gleich der Tiefe der Vorbohrung (20) zuzüglich der Dicke des gegebenenfalls zu befestigenden Werkstücks (10) und des Maßes (a) des für das Ausschwenken der Riegelelemente (36) in die Verriegelungsstellung erforderlichen Verschiebungsweges ist, und daß zwischen dem sich konisch verjüngenden Bauteil (38) und der Distanzhülse (42) ein sich unter Einwirkung von Druckspannungen in Axialrichtung im Sinne einer Verkürzung verformender Hülsenbauteil (40) angeordnet ist, dessen Widerstand gegen Verkürzung bei axialer Schlageinwirkung größer als der Widerstand der Riegelelemente (36) gegen Ausschwenken in die an der Hinterschnittfläche (24) verriegelte Stellung ist.

**Claim**

A positive fastening arrangement of a dowel (14) in a bore (18) in a sub-surface (12), in which the bore, in the form of a blind, cylindrical bore, is provided at a distance from its mouth in the sub-surface, with and expansion (22) comprising an undercut surface (24) extending radially and rearwardly towards the mouth of the bore, the dowel comprising a head part (34) of approximately the same diameter as the bore, arranged at the end of an elongated fastening bolt (26) and adapted to be introduced into the bore, the ends of the locking elements (36), at the inner end of the bore, being mounted pivotably upon the head part, the rearwardly projecting ends of the locking elements being pivotable from a position within the diameter of the bore (18) to a position in which they project at least partly out of the diameter of the head part (34) and in which they engage lockingly in the undercut surface (24) in the bore, the fastening bolt (26) carrying at its outer end a bolt head (30), or a nut screwed to a thread on the fastening bolt, being surrounded by a distance sleeve (42) which is provided, at the inner end of the bore, with a component (38) tapering conically towards the interior of the bore and engaging between the ends of the locking elements (36) pointing towards the mouth of the bore in such a manner that when the head part (34) is displaced towards the mouth of the bore, the ends of the locking elements (36) pointing towards the mouth of the bore, are pivoted positively and radially outwardly, characterized in that the head part (34) and the locking elements (36) are integral parts of a sleeve-like anchoring component (28) carrying a wedge-shaped peripheral groove (32) in its outer surface, the wall of the anchoring component (28) being divided into a number of segmental sections by a series of slots recessed from the front edge, at uniform angular spacing, parallel with the center line, up to the peripheral groove (32), the segmental sections constituting the locking elements (36), while the remaining unslotted part of the anchoring component (28) forms the head part (34), the length of the dowel (14), as measured from the end face, in the interior of the bore, of the head part (34) to the end face at the mouth of the bore, of the distance sleeve (42), is approximately equal, when the locking elements (36) are pivoted inwardly, to the depth of the preliminary bore (20) plus the thickness of the workpiece to be fastened, and of the dimension (a) which is the travel provided to allow the locking elements (36) to pivot into the locking position, and in that there is arranged between the conically tapering component (38) and the distance sleeve (42) a sleeve component (40) which is deformed in axial direction, under the action of compressive stresses, in such a manner as to become shorter, the resistance of the sleeve component being greater than the resistance of the locking elements (36) to pivoting outwardly into the locked position at the undercut surface (24).

**Revendication**

Système de fixation, par conjugaison de formes, d'une cheville (14) dans un trou (18) d'un support (12), selon lequel le trou, réalisé sous forme d'un trou borgne cylindrique, est pourvu, à distance de son embouchure dans le support, d'un élargissement (22), comportant une surface de dépouille (24) l'entourant sensiblement radialement et dirigé vers l'arrière en direction de l'embouchure du trou, et la cheville comporte une pièce de tête (34), correspondant sensiblement au diamètre du trou, pouvant être introduite dans celui-ci et disposée à l'extrémité, intérieure au trou, un boulon de fixation (26) de profil allongé, pièce de tête sur laquelle sont montées de façon pivotante les extrémités, intérieures au trou, d'éléments de verrouillage (36), tandis que leurs extrémités dirigées vers l'arrière en direction de l'embouchure du trou peuvent pivoter d'une position placée à l'intérieur du diamètre du trou jusque dans une position dans laquelle elles dépassent au moins partiellement du diamètre de la pièce de tête (34) et s'accrochent avec effet de verrouillage sur la surface de dépouille (24) du trou, le boulon de fixation, portant à son extrémité extérieure une tête de vis (30) ou bien un écrou vissé sur un filetage du boulon de fixation (26), étant entouré par un fourreau d'espacement (42), qui comporte à son extrémité intérieure au trou une pièce (38), de profil conique vers l'intérieur du trou, qui s'accroche entre les extrémités, dirigées vers l'embouchure du trou, des éléments de verrouillage (36) de telle sorte que, lors d'une translation de la pièce de tête (34) en direction de l'embouchure du trou, une extrémité, dirigée vers l'embouchure du trou, des éléments de verrouillage (36) soit obligatoirement déplacée par pivotement radial vers l'extérieur, caractérisé en ce que la pièce de tête (34) et les éléments de verrouillage (36) constituent des parties, liées unitairement, d'un composant d'ancrage (28) en forme de douille, dans la surface extérieure duquel est poinçonnée une rainure périphérique (32) en forme de coin, la paroi du composant d'ancrage (28) étant divisée, par un certain nombre de fentes formées à partir de l'arête frontale, placée du côté de l'embouchure de trou, à intervalles angulaires uniformes et parallèlement à l'axe, jusqu'à la rainure périphérique (32), en un certain nombre de portions de segments, qui constituent les éléments de verrouillage (36), tandis que la partie restante non fendue du composant d'ancrage constitue la pièce de tête (34), en ce que la longueur de la cheville (14), mesurée à partir de la surface frontale, intérieure au trou de la pièce de tête (34) jusqu'à la surface frontale, placée du côté de l'embouchure de trou, du fourreau d'espacement (42), est à peu près égale, dans la condition de pivotement vers l'intérieur des éléments de verrouillage (36), à la profondeur du trou initial (20) plus l'épaisseur de la pièce (10) à fixer le cas échéant et la dimension (a) de la course de translation nécessaire pour l'écartement par pivotement des éléments de verrouillage (36) jusque dans la position de verrouillage, et en ce qu'il est prévu entre le composant (38) de profil conique et le fourreau d'espacement (42) un composant en forme de fourreau (40), se déformant dans le sens d'un raccourcissement sous l'action de contraintes de pression s'exerçant dans une direction axiale, et dont la résistance au raccourcissement dans le cas d'une sollicitation par percussion est plus grande que la résistance des éléments de verrouillage (36) à un pivotement vers l'extérieur jusque dans la position de verrouillage contre la surface de dépouille (24).

FIG.1a

FIG.1b

FIG.1c

FIG.2a

FIG.2b

FIG.3

FIG.4

FIG.5

FIG.6